# EUROPEAN PATENT APPLICATION

(11) **EP 1 595 451 A1**
(43) Date of publication of application: **16.11.2005**
(21) Application number: 05002844.8
(22) Date of filing: 10.02.2005
(51) Int. Cl.: A01M 1/20

(54) **Multi-season pest control system and method**

(30) Priority: 10.05.2004 US 842291
(71) Applicant: S. C. Johnson & Son, Inc., Racine, WI 53403-2236 (US)
(72) Inventor: Neumann, Hermann, Kenosha WI 53140 (US)
(74) Representative: Ruschke, Hans Edvard

(57) **Abstract**

A pest control method includes at least providing pest control dispensers (110), having at least one user-perceivable characteristic associated with a climatic season of the year; and providing a pest control agent (114) in the pest control dispensers, the amount of the pest control agent substantially having a useful life equal to a climatic season when the pest control agent is activated; wherein the changing of a climatic season and the characteristic of the dispensers combine to suggest to a user that a dispenser should be operatively replaced. Also, a pest control kit (250) includes a plurality of the pest control dispensers (110) described above.

## Description

### Technical Field

The present invention generally relates to pest control. More specifically, the present invention relates to the efficient, convenient and customer-friendly use of insecticide and insect repellant to control indoor pests such as moths over long time periods of time.

### Background Art

Indoor pests such as moths have long been the target for both control and eradication. As is obvious to many, moths are linked to a variety of problems including the damaging of garments and linens by eating away regions and making them unsightly and often unusable. Moths may also add to sanitation problems in buildings when these insects and their larvae die in closets, drawers, and other areas where they are not always immediately detected. And moths may also introduce undesirable airborne allergens to buildings.

Prior art indoor moth control methods range from simple "moth balls" and the like, which may be comprised of volatile mixtures (meaning that they vaporize at atmospheric pressure) of moth repellants and/or moth insecticides, to more sophisticated and expensive electronically-controlled dispensers. Regardless of the delivery system used, the chemical pest control agent has a finite effective life, requiring the customer to periodically replace the moth control dispenser (typically having a volatilizing moth control agent filled in or impregnating the dispenser) or dispensers.

Relying on a customer's attention to detail, diligence, and memory often means that moth control dispensers are left in place beyond their useful life, leading to ineffective moth control. In rarer cases, the customer may change moth control dispensers more frequently than is actually needed.

Prior art moth control methods sometime include dispensers that are either transparent, or include some other mechanism for allowing a customer to visually detect that the pest control agent has been effectively exhausted. However, there is still no practical, effective and low-cost way of reminding or encouraging the moth control customer to replace old moth control dispensers with new ones at the appropriate times, without relying on diligence beyond most customers.

The problems related to reminding or encouraging customers to change moth control dispensers when effective lives are exhausted are not limited to pests such as moths, but include methods targeting other pests not limited to insects, and target control areas both indoors and outdoors.

### Disclosure of Invention

In view of the above-identified problems and limitations of the prior art, the present invention provides a pest control method at least including: providing a plurality of pest control dispensers having at least one user-perceivable characteristic associated with a climatic season of the year; and providing a pest control agent in the pest control dispensers, the amount of the pest control agent substantially having a useful life equal to a climatic season when the pest control agent is activated; wherein the changing of a climatic season and the characteristic of the dispensers combine to suggest to a user that a dispenser should be operatively replaced.

The present invention also provides a pest control kit at least including: a plurality of pest control dispensers having at least one user-perceivable characteristic associated with a climatic season of the year; and a pest control agent in the pest control dispensers, the amount of the pest control agent substantially having a useful life substantially equal to a climatic season when the pest control agent is activated; wherein the changing of a climatic season and the characteristic of the dispensers combine to suggest to a user that a dispenser should be operatively replaced. By way of example only, a pest control agent useful life not less than and not in excess of 20% more than the climatic season is preferred and will be considered substantially equal to the climatic season.

In accordance with another aspect of the invention, a pest control kit includes two or more pest control dispensers having pest control capability that have at least a first user-perceivable characteristic associated with a first season of the year. Each of the dispensers has a different characteristic (or characteristics, if more than one), and each different characteristic (or characteristics) is associated with a different season. The kit may have four dispensers, in which each dispenser is associated with only one of four different seasons. Each dispenser in the kit may be sealed by its own pest control vapor-resistant seal

### Brief Description of Drawings

Features of the present invention will become apparent to those skilled in the art from the following description with reference to the drawings, in which:

Figure 1 illustrates examples of the present-inventive seasonal pest control dispensers that can be used during distinct seasons of the year (i.e., autumn, winter, spring, summer); and

Figure 2 illustrates examples of the present-inventive seasonal pest control dispenser kits which include distinct seasonal pest control dispensers designed for use during more than one season of the year.

### Best Mode for Carrying Out the Invention

The term "climatic season" refers either to the formal, 3 month long seasons of spring, summer, fall, and winter, as demarcated by the equinoxes and solstices, or, alternatively to less technically defined seasons. With respect to the latter, and by way of example only, the year could be considered divided into only the two seasons of summer and winter, correlating with the storage of winter clothes (in summer) and summer clothes (in winter).

The term "pest control agent" refers to a compound or instrumentality which either repels pests, kills pests, or both. Thus, "pest repellants," "pesticides," "insect repellants," "insecticides," and combinations of these terms are all included in the general definition.

To summarize, one of the preferred embodiments of the present invention discloses a kit sold to consumers with a set of volatile moth control dispensers. Each dispenser has a moth control agent stored or impregnated therein, such that when the agent is exposed to open air, the effective useful life of the dispenser is approximately equal to one climatic season of the year. Each dispenser has attributes that suggest to a customer that it should be operational during a particular season of the year. Therefore, at the transition from one season of the year into another season of the year, a customer is likely to be reminded that it is time for a moth dispenser change either by seeing that the dispenser being used is out of synch with the new season, or by seeing unused dispensers in the kit that are indicative of the new season.

The attributes used to associate moth control dispensers with particular seasons of the year include their shape, symbols, color and fragrance of either the dispenser or the moth control agent, or both. The moth control dispensers are also constructed to allow a customer to see that the pest control agent has been exhausted.

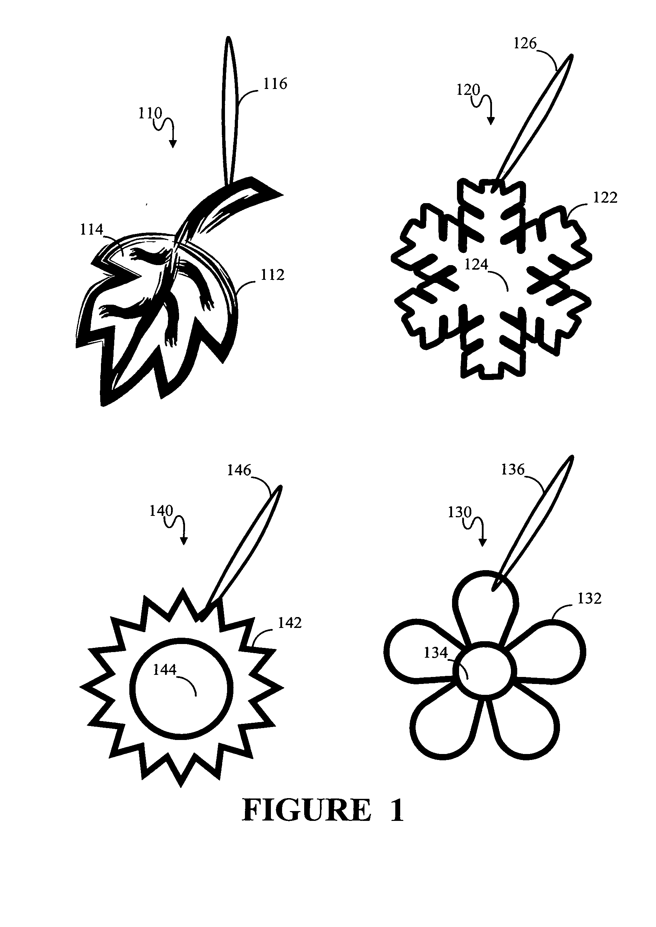

Figure 1 illustrates examples of pest control dispensers that because of their attributes, are designed to encourage a customer to associate their use with a particular season of the year (i.e., autumn, winter, spring and summer). The pest control dispenser 110 is in the shape of a brown leaf, the shape and color suggesting that it is to be used during the autumn (or "fall") season. In the preferred embodiment, the dispenser 110 also has a fragrance that users associate with autumn than other seasons of the year.

The pest control dispenser 110 has a body or substrate 112, which incorporates (e.g. is partially filled with or impregnated with) a volatilizing moth control agent represented by the number 114. This agent gives the dispenser pest control capability. A string or wire loop 116 attached to the dispenser body 112 is used to hang the dispenser when desired by the customer.

The pest control dispenser 120 is suggestive of winter use by the snowflake shape and white color of its body or substrate 122. The fragrance associated with the dispenser body, pest control agent 124, or both is also suggestive of the winter season. The loop 126 also allows the dispenser 120 to be suspended from a location if desired.

Likewise, the pest control dispensers 130 and 140 are suggestive of use in spring and summer, respectively, by their shapes, symbols, colors, and fragrances. Elements 132 and 142 are analogous to elements 112 and 122, elements 134 and 144 are analogous to elements 114 and 124, and elements 136 and 146 are analogous to elements 116 and 126, described *supra*.

In a simple embodiment, the dispenser bodies or substrates (112, 122, 132 and 142) can be constructed of paper or cardboard impregnated with a volatilizing moth control agent (114, 124, 134 and 144) and fragrance. More complex construction of the pest control dispensers can include a blister filled with a pest control gel formula, or some other carrier (i.e., coated or impregnated plastic beads) that is sealed (e.g. by foil), and through which the pest control agent and fragrance can evaporate.

The foregoing are only a few of the possible characteristics that may be associated with a season. Other characteristics that may be associated with a season may be expressed by configuring (1) the shape of the outer periphery of the dispenser, (2) the profile of the dispenser, (3) indicia printed on the dispenser, (4) shape of regions pressed out of the dispenser, (5) a three dimensional shape of an assembled dispenser, (6) the shape of an embossment on the dispenser, (7) the color of the dispenser, or the (8) the aroma of the dispenser. These forms may, of course, be combined to enhance the associative effect on the user. In the preferred arrangement shown herein, each dispenser has more than one characteristic associated with a season, and more preferably three such characteristics, such as the dispenser shape, color, and fragrance illustrated herein.

To provide the seasonal association for the user, the content of the characteristics mentioned in the previous paragraph may indicate (1) scenes associated with the season (snow-covered land or habitations); (2) physical activities associated with the season (swimming, boating, ice-fishing, baseball, skiing); (3) words or salutations associated with the season (e.g. the words "Merry Christmas", "Winter", "Happy Spring", "Happy Fourth of July", "Summer"); (4) sports associated with the season (e.g. swimming, boating, football, ice fishing); (5) equipment associated with the season, (e.g. baseball glove, lawn mower, ice fishing shanty, snow balls, leaf rakes, scythes); (6) animal or vegetable products associated with the season (e.g. pumpkins, tulips); (7) religious or other feast days or festivals associated with the season (e.g. Christmas, Ramadan, Easter, Passover); and (8) seasonal aromas such as seasonal foods (e.g. pumpkin pie scent), seasonal plants (e.g. daffodil scent), seasonal activities (e.g. scent of burning leaves, harvested fields, new mown hay). Examples of preferred scents include, for Spring/Summer, the Lightning F 559029 and Sunflower F559030 scents and, for Autumn/Winter, the Adore F559028 and Gingerbread F559211 scents, all available from Quest International Fragrances Company of Mount Olive, New Jersey, USA. The foregoing examples are merely suggestive and are merely a sampling of the many characteristics that may indicate a season.

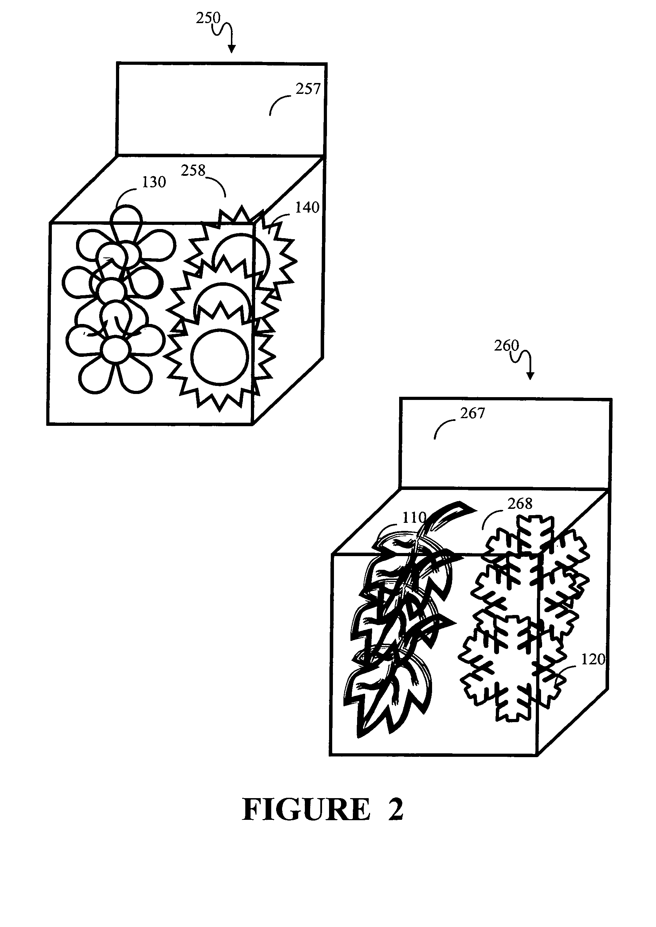

Figure 2 illustrates examples of the present-inventive seasonal pest control dispenser kits. The kit 250 has packaging that can include cardboard backing 257 and a clear clamshell 258 enclosing several pest control dispensers. The kit 260 is similar to kit 250 (i.e., elements 267 and 268 are analogous to elements 257 and 258, respectively), with the difference being that the kit 250 includes pest control dispensers encouraged for use during the spring and summer seasons, while the kit 260 includes pest control dispensers encouraged for use during the autumn and winter seasons.

For example, during spring, a customer can place several of the spring pest control dispensers 130 at strategic or problem locations to repel and kill moths. Around the time of the summer solstice, the customer discards the dispensers 130 and replaces them with summer pest control dispensers 140.

Similarly, during the autumn season, a customer can place several of the autumn pest control dispensers 110 at strategic or problem locations to repel and kill moths. Around the time of the winter solstice, the customer discards the dispensers 110 and replaces them with winter pest control dispensers 120.

Another variation is to provide a kit with summer and autumn pest control dispensers, so that a customer is encouraged to place several of the summer pest control dispensers 140 at strategic or problem locations to repel and kill moths around the time of the summer solstice. Around the time of the autumn equinox, the customer discards the dispensers 140 and replaces them with autumn pest control dispensers 110.

Still yet another variation is to provide a kit with winter and spring pest control dispensers, so that a customer is encouraged to place several of the winter pest control dispensers 120 at strategic or problem locations to repel and kill moths around the time of the winter solstice. Around the time of the vernal equinox, the customer discards the dispensers 120 and replaces them with spring pest control dispensers 130.

In the preferred embodiment, pest control kits can be separately sold that contain pest control dispensers for as few as one season of use, or contain pest control dispensers for as many as all four seasons of use.

Each dispenser in a kit of dispensers is associated with a different season. For example, a two season kit has two dispensers, each dispenser having a characteristic (or characteristics) that is associated with a different season. For example, a kit containing dispensers for summer and winter shall each have at least one characteristic that is different than the characteristic of the other dispenser. Those at least two different characteristics would indicate two different seasons.

The same is true of kits with different numbers of dispensers, for example, a four-season kit containing four dispensers having characteristics associated with spring, summer, fall and winter seasons, respectively. Each of these four dispensers shall have an associated characteristic that is different from the characteristics of the other the dispensers and identifies its own particular season.

In a preferred embodiment, all the dispensers in a kit shall have at least one characteristic that is different from all the others such that each dispenser in the kit has at least one characteristic that is unique among all the dispensers in the kit.

Each dispenser in the kits shown above is preferably enclosed with its own breachable fragrance and pest control vapor-resistant seal, such as a foil seal covering a blister. The foil can be breached by peeling it from the blister. Alternatively, each dispenser may be enclosed in a plastic or plastic and foil pouch, preferably rectangular, that may be breached by tearing. Alternatively, the seal can be a coating or shell around the dispenser that is breached by manual flexure and concomitant cracking.

Variations and modifications of the present invention are possible, given the above description. However, all variations and modifications which are obvious to those skilled in the art to which the present invention pertains are considered to be within the scope of the protection granted by this patent.

To reiterate, the present invention and its teachings are not limited to moth control, but are also applicable to other types of pest control. Also, the shapes, colors, and symbols are not limited to those examples given *supra*.

## Claims

1. A pest control method comprising the steps of:
providing a plurality of pest control dispensers having at least one user-perceivable characteristic associated with a climatic season of the year; and
providing a pest control agent in and dispensable from said pest control dispensers, the amount of said pest control agent having a useful life substantially equal to a climatic season when said pest control agent is activated;
wherein the changing of a climatic season and the characteristic of said dispensers combine to suggest to a user that a dispenser should be operatively replaced.

2. The method of Claim 1, wherein said user-perceivable characteristic comprises shape indicia.

3. The method of Claim 1, wherein said user-perceivable characteristic comprises color indicia.

4. The method of Claim 1, wherein said user-perceivable characteristic comprises aromatic indicia.

5. The method of Claim 1, wherein said user-perceivable characteristic comprises shape, color and aromatic indicia.

6. The method of Claim 1, wherein said user-perceivable characteristic comprises symbolic indicia.

7. The method of Claim 1, further adapted for the indoor control of moths.

8. The method of Claim 1, further comprising:
providing to a consumer at the time of purchase, at least one dispenser associated with a first climatic season of the year; and
providing to a consumer at the time of purchase, at least one dispenser associated with a second climatic season of the year.

9. The method of Claim 1, further comprising:
providing to a consumer at the time of purchase, at least one dispenser associated with each climatic season of the year.

10. A pest control kit comprising:
a plurality of pest control dispensers having at least one user-perceivable characteristic associated with a climatic season of the year; and
a pest control agent in said pest control dispensers, the amount of said pest control agent having a useful life substantially equal to a climatic season when said pest control agent is activated;
wherein the changing of a climatic season and the characteristic of said dispensers combine to suggest to a user that a dispenser should be operatively replaced.

11. The pest control kit of Claim 10, wherein said user-perceivable characteristic comprises shape indicia.

12. The pest control kit of Claim 10, wherein said user-perceivable characteristic comprises color indicia.

13. The pest control kit of Claim 10, wherein said user-perceivable characteristic comprises aromatic indicia.

14. The pest control kit of Claim 10, wherein said user-perceivable characteristic comprises shape, color and aromatic indicia.

15. The pest control kit of Claim 10, wherein said user-perceivable characteristic comprises symbolic indicia.

16. The pest control kit of Claim 10, further adapted for the indoor control of moths.

17. The pest control kit of Claim 10, further comprising:
at least one dispenser associated with a first climatic season of the year; and
at least one dispenser associated with a second climatic season of the year.

18. The pest control kit of Claim 10, further comprising at least one dispenser associated with each climatic season of the year.

19. A pest control kit comprising:
a first pest control dispenser having pest control capability, the first dispenser having at least a first user-perceivable characteristic associated with a first season of the year; and
a second pest control dispenser having pest control capability, the second dispenser having at least a second user-perceivable characteristic different from the first characteristic, wherein the second characteristic is associated with a second season of the year that is different from the first season.

20. The pest control kit of claim 19, further comprising:
a third pest control dispenser having pest control capability, the third dispenser having at least a third user-perceivable characteristic that is different from the first and second characteristics, wherein the third characteristic is associated with a third season of the year different from the first and second seasons; and
a fourth pest control dispenser having pest control capability, the fourth dispenser having at least a fourth user-perceivable characteristic different from the first, second and third characteristics, wherein the fourth characteristic is associated with a fourth season of the year that is different from the first, second and third seasons.

21. The pest control kit of claim 20, wherein the first, second, third and fourth seasons are spring, summer fall and winter, respectively.

22. The pest control kit of claim 19 wherein the first season is summer and the second season is winter.

23. The pest control kit of claim 19, wherein each dispenser has more than one characteristic associated with its season.

24. The pest control kit of claim 19 in which each of the first and second dispensers is individually sealed with its own pest control vapor-resistant seal.

25. A pest control method comprising the steps of:
obtaining a plurality of pest control dispensers, each pest control dispenser having at least one user-perceivable characteristic associated with a climatic season of the year with the user-perceivable characteristics of successive pest control dispensers being associated with successive seasons, each pest control dispenser having a pest control agent in an amount such that said pest control agent has a useful life, when said pest control agent is activated, substantially equal to a climatic season;
selecting and activating a first pest control dispenser having a characteristic associated with a first climatic season;
at about the end of the first climatic season, selecting and activating a subsequent pest control dispenser having a characteristic associated with the subsequent climatic season;
wherein the changing of a climatic season and the characteristics of said dispensers combine to suggest to a user that a dispenser should be operatively replaced.

26. A pest control kit comprising:
a plurality of pest control dispensers, each pest control dispenser having at least one user-perceivable characteristic associated with a climatic season of the year, with the user-perceivable characteristics of successive pest control dispensers being associated with successive seasons, each pest control dispenser having a pest control agent in an amount such that said pest control agent has a useful life, when said pest control agent is activated, substantially equal to a climatic season;
wherein the changing of a climatic season and the characteristics of said dispensers combine to suggest to a user that a dispenser should be operatively replaced.

## Amended claims

### Amended claims in accordance with Rule 86(2) EPC.

**1.** A pest control method comprising the steps of:
providing a plurality of pest control dispensers each having at least one user-perceivable characteristic associated with a different climatic season of the year the characteristic making the dispensers readily distinguishable from one another;
providing a pest control agent in and dispensable from said pest control dispensers, the amount of said pest control agent having a useful life substantially equal to a respective one of said climatic seasons when said pest control agent is activated.

**2.** The method of claim 1, wherein said user-perceivable characteristic comprises one of shape indicia.

**3.** The method of claim 1, wherein said user-perceivable characteristic comprises shape, colour and aromatic indicia.

**4.** The method of claim 1, wherein said user perceivable characteristic comprises symbolic indicia.

**5.** The method of claim 1, further adapted for the indoor control of moths.

**6.** A pest control kit comprising:
a plurality of pest control dispensers each having at least one user-perceivable characteristic associated with a different climatic season of the year the characteristic making the dispensers readily distinguishable from one another; and
a pest control agent in said pest control dispensers, the amount of said pest control agent having a useful life substantially equal to a respective one of said climatic seasons when said pest control agent is activated.

**7.** The pest control kit of claim 6, wherein said user-perceivable characteristic comprises shape indicia.

**8.** The pest control kit of claim 7, wherein one of said dispensers is in the shape of a snowflake.

**9.** The pest control kit of claim 7 or 8, wherein one of said dispensers is in the shape of a leaf.

**10.** The pest control kit of claim 7, 8, or 9, wherein one of said dispensers is in the shape of a flower.

**11.** The pest control kit of claim 6, wherein said user-perceivable characteristic comprises colour indicia.

**12.** The pest control kit of claim 6, wherein said user-perceivable characteristic comprises aromatic indicia.

**13.** The pest control kit of claim 6, wherein said user-perceivable characteristic comprises shape, colour and aromatic indicia.

**14.** The pest control kit of claim 6, wherein said user perceivable characteristic comprises symbolic indicia.

**15.** The pest control kit of claim 6, further adapted for the indoor control of moths.

**16.** The pest control kit of claim 6, wherein there are a total of four pest control dispensers in said plurality.

**17.** The pest control kit according to claim 16, wherein said four pest control dispensers are packaged in two separate packages.

**18.** The pest control kit of claim 17, wherein the first package contains pest control dispenser identified as being for spring and summer, and the second package contains pest control dispenser identified as being for autumn and winter, respectively.

**19.** The pest control kit of claim 6, wherein there are a total of two pest control dispensers in said plurality, one of which is identified as being for winter.
